# EUROPEAN PATENT APPLICATION

(11) **EP 4 272 955 A1**
(43) Date of publication of application: **08.11.2023**
(21) Application number: 22749478.8
(22) Date of filing: 18.01.2022
(51) Int. Cl.: B32B 15/08, B32B 3/30, G01S 7/03, G01S 13/931

(54) **LAMINATED STRUCTURE AND OBJECT DETECTING STRUCTURE**

(30) Priority: 03.02.2021 JP 2021015926
(71) Applicant: Resonac Corporation, Tokyo 105-8518 (JP)
(72) Inventor: SHIOKAWA, Hirofumi, Tagawa-shi, Fukuoka 825-0005 (JP)
(74) Representative: Hoffmann Eitle
(86) International application number: PCT/JP2022/001657
(87) International publication number: WO 2022/168602

(57) **Abstract**

A laminated structure includes, in the following order: an outer member having a concave portion; a metal layer; and an inner member having a convex portion that is fitted with the concave portion to form a fitting portion.

## Description

### Technical Field

The present disclosure relates to a laminated structure and an object detection structure.

### Background Art

Japanese Patent Application Laid-Open (JP-A) No. 2003-019765 discloses a metallic coating film in which an undercoat film and a metal film are coated in this order on a substrate, and a clear coating film is coated on the metal film; and that this metallic coating film is for use in automotive parts.

### SUMMARY OF INVENTION

Meanwhile, automobiles in recent years have seen remarkable progress in safety equipment, and for example, the installation of automatic collision avoidance systems has become commonplace.

Such an automatic collision avoidance system automatically activates the brakes using image data from an on-board camera and information about relative distance to an object with a millimeter wave radar.

A millimeter wave radar transmitter/receiver, which constitutes the automatic collision avoidance system, is desirably placed at a front center of an automobile. Generally, an automobile emblem is placed at a front center of an automobile. Therefore, the millimeter wave radar transmitter/receiver is desirably placed on a rear side of the automobile emblem. For example, a metallic coating film described in JP-A 2003-019765 can be assumed to be used for automobile emblem.

A laminated structure, in which multiple members such as an inner member and an outer member are laminated, is used for automobile emblems and the like. Generally, the laminated structure is produced by insert molding for eliminating gaps between members in order to reduce an amount of transmission attenuation.

However, since the metal layer is damaged by high temperature, high pressure or the like in insert molding, deterioration of the appearance of the laminated structure becomes a problem, and product design may be impaired.

In consideration of damage to the metal layer, a protective film or the like is provided on the inner member or outer member, but there have been problems with manufacturing costs and productivity.

The present disclosure has been made in view of the above circumstances, and aims to provide a laminated structure with excellent appearance and an object detection structure including the same.

### Solution to Problem

The specific measures for achieving the above aims are as follows.
<1> A laminated structure including, in the following order:
   an outer member having a concave portion;
   a metal layer; and
   an inner member having a convex portion that is fitted with the concave portion to form a fitting portion.
<2> The laminated structure according to <1>, further including a region surrounded by the fitting portion.
<3> The laminated structure according to <1> or <2>, in which the fitting portion is provided within 3 mm from an outer peripheral edge of the laminated structure.
<4> The laminated structure according to any one of <1> to <3>, in which the metal layer includes a silver particle layer.
<5> The laminated structure according to any one of <1> to <4>, in which the metal layer has a sea-island structure in which metal particles are dispersedly provided in a shape of islands.
<6> The laminated structure according to any one of <1> to <5>, which is used as an exterior member of a movable body.
<7> An object detection structure including:
   the laminated structure according to any one of <1> to <6>; and
   a millimeter wave radar that emits a millimeter wave toward the laminated structure.

### Advantageous Effects of Invention

According to one embodiment in the present disclosure, it is possible to provide a laminated structure with excellent appearance and an object detection structure including the same.

### BRIEF DESCRIPTION OF DRAWINGS

FIG. 1 is a schematic top view showing an example of a laminated structure in the present disclosure.
FIG. 2 is a schematic cross-sectional view of the laminated structure shown in Fig. 1 taken along line AA.
FIG. 3 is a schematic top view showing another example of the laminated structure in the present disclosure.
FIG. 4 is a schematic cross-sectional view for explaining an example of a method of producing a laminated structure in the present disclosure.
FIG. 5 is a schematic cross-sectional view for explaining an example of a method of producing a laminated structure in the present disclosure.
FIG. 6 is a schematic cross-sectional view for explaining an example of a method of producing a laminated structure in the present disclosure.
FIG. 7 is a schematic cross-sectional view showing an outer member used in Example 1.
FIG. 8 is a schematic cross-sectional view showing an inner member used in Example 1.
FIG. 9 is a schematic cross-sectional view showing an outer member having a metal layer used in Example 1.

### DESCRIPTION OF EMBODIMENTS

A detailed description will be given below of embodiments for implementing the present disclosure. However, the present disclosure is not limited to the following embodiments. In the following embodiments, the constituent elements (including element steps and the like) are not essential unless otherwise specified. The same applies to numerical values and their ranges, which do not limit the present disclosure.

In the present disclosure, the numerical range indicated using "to" includes the numerical values before and after "to" as the minimum and maximum values, respectively.

In the present disclosure, in the numerical ranges described step by step in the present disclosure, the upper limit or lower limit of one numerical range may be replaced with the upper or lower limit of another numerical range described step by step.. Moreover, in the numerical ranges described in the present disclosure, the upper or lower limits of the numerical ranges may be replaced with the values shown in the examples.

In the present disclosure, each component may contain multiple types of applicable substances.

In the present disclosure, the particles corresponding to each component may contain multiple types of particles.

In the present disclosure, the term "layer" or "film" encompasses the case where the layer or film is formed in the entire region and the case where the layer or film is formed in only a part of the region, when observing the region where the layer or film is present.

In the present disclosure, a thickness of each layer refers to the arithmetic mean value obtained by preparing a test piece from the object to be measured using a microtome or the like and measuring a thickness at any five points with an electron microscope.

In the present disclosure, "(meth)acrylic" is a term used with a concept that includes both acrylic and methacrylic.

In the present disclosure, the term "process" encompasses not only the case where a process that is independent of other processes, but also the case where a process that cannot be clearly distinguished from other processes, provided that the purpose of the process is achieved.

### <Laminated structure>

The laminated structure in the present disclosure includes, in the following order: an outer member having a concave portion; a metal layer; and an inner member having a convex portion that is fitted with the concave portion to form a fitting portion.

The laminated structure in the present disclosure has excellent appearance. The reason for this is presumed as follows. As will be described later, the laminated structure in the present disclosure can be manufactured without using insert molding. Therefore, it is presumed that the metal layer is less damaged during the manufacturing process, and the laminate structure including the metal layer has an excellent appearance.

In each of the above-mentioned members, a difference between a value of a relative permittivity of a member with the maximum relative permittivity and a value of a relative permittivity of a member with the minimum relative permittivity is preferably 1.0 or less, more preferably 0.5 or less, and still more preferably 0.3 or less, from the viewpoint of effective reduction of an amount of transmission attenuation of millimeter wave.

A lower limit of the aforementioned difference is not particularly limited.

In the present disclosure, the relative permittivities of the first member, the second member and the filling member all mean values at 77 GHz.

Applications of the laminated structure in the present disclosure include, for example, an exterior member, and more specifically, an exterior member for a movable body. Examples of the movable body include an automobile such as a four-wheeled vehicle and a two-wheeled vehicle, a train, a cart, a ship, an aircraft, a bicycle, a trolley, a trunk with caster, a robot, a drone, and an electronic device.

Examples of the exterior member include automobile parts such as an emblem, a bumper, and a grill.

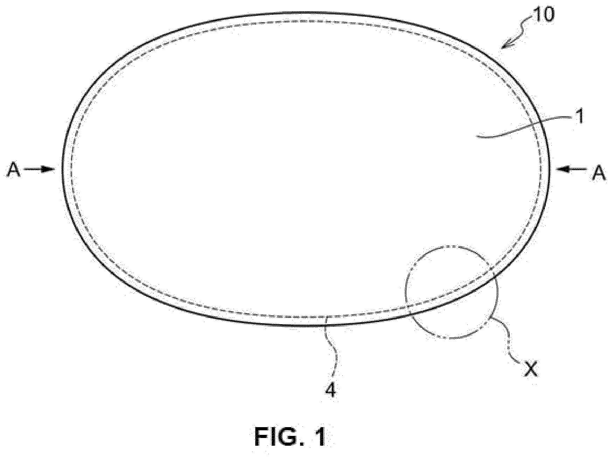

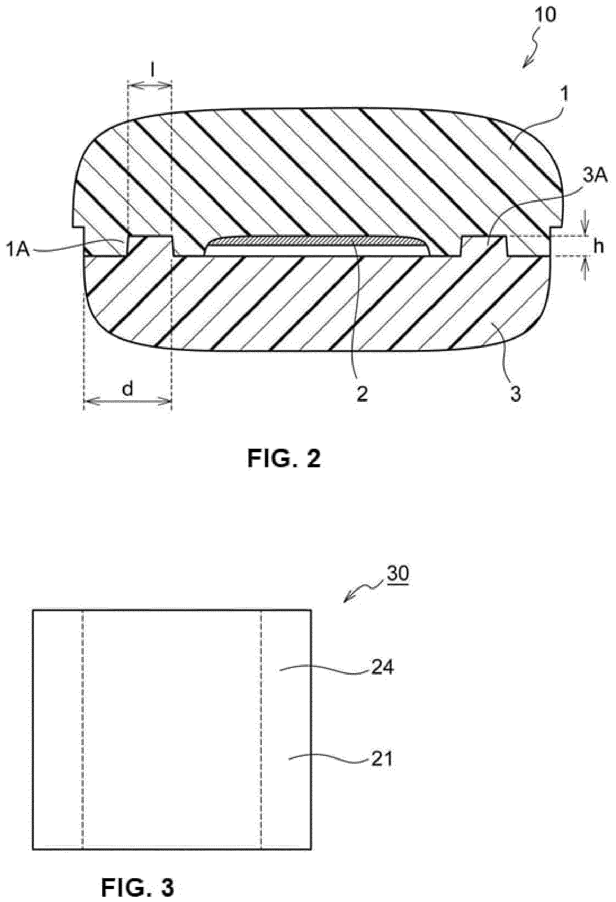

An example of the laminated structure in the present disclosure will be described with reference to FIGs 1 and 2. FIG. 1 is a schematic top view showing an example of a laminated structure 10, and FIG. 2 is a schematic cross-sectional view of the laminated structure 10 shown in FIG. 1 taken along line AA.

As shown in FIG. 2, the laminated structure 10 includes, in the following order: an outer member 1 having a concave portion 1A; a metal layer 2; and an inner member 3 having a convex portion 3A that is fitted with the concave portion 1A to form a fitting portion. Millimeter waves pass through the laminated structure 10 as indicated by arrows in FIG. 2.

In FIG. 1, the fitting portion 4 where the concave portion 1A and the convex portion 3A are fitted is indicated by a dotted line.

In FIG. 2, the width of the convex portion and the concave portion forming the fitting portion is indicated by reference numeral l, and the height of the fitting portion is indicated by symbol h.

As shown in FIG. 1, the laminated structure 10 preferably has a region surrounded by the outer peripheral edge of the fitting portion 4 (hereinafter also referred to as a specific region). Although FIG. 1 shows that the specific region follows the shape of the laminated structure 10, it is not limited to this and may not follow the shape.

By having the specific region in the laminated structure, the airtightness between the outer member and the inner member tends to be improved, and deterioration over time of the metal layer or the like within the specific region can be suppressed.

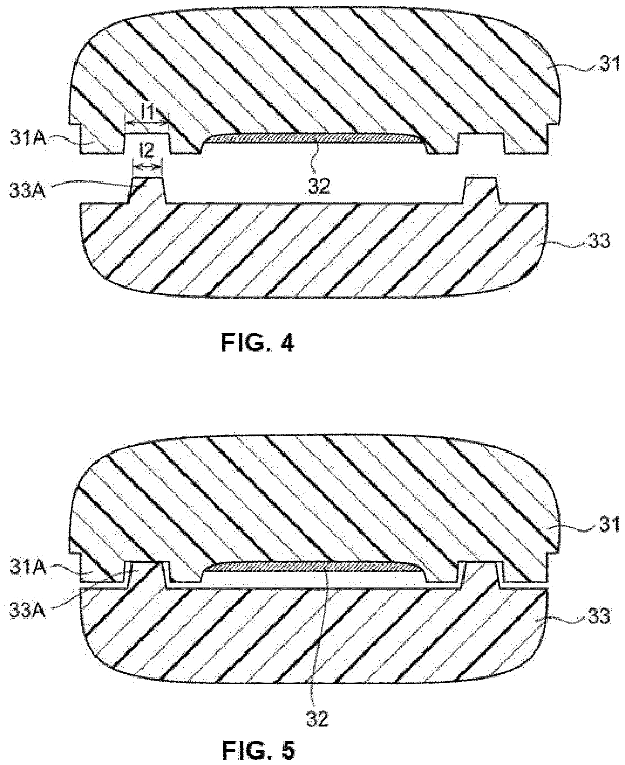

The laminated structure 10 is not limited to the form shown in FIG. 1, and may not have the specific region as shown in FIG. 4. The fitting portion 24 may be placed substantially parallel to the length direction or the width direction. In FIG. 4, the laminated structure is indicated by reference numeral 30, the outer member is indicated by reference numeral 21, and the fitting portion is indicated by reference numeral 24.

An inner peripheral end of the fitting portion is preferably provided within 3 mm from an outer peripheral edge of the laminated structure.

In the present disclosure, the outer peripheral edge of the laminated structure means an edge of the outer member or an edge of a member which has the smaller area in the outer member.

In FIG. 3, a distance between the inner peripheral edge of the fitting portion and the outer peripheral edge of the laminated structure is indicated by d.

From the viewpoint of airtightness and strength of the fitting portion, a width l of the convex portion and the concave portion forming the fitting portion is preferably from 0.5 mm to 2.0 mm, and more preferably from 1.0 mm to 1.5 mm.

From the viewpoint of airtightness and strength of the fitting portion, a height h of the fitting portion is preferably from 0.1 mm to 1.0 mm, and more preferably from 0.3 mm to 0.8 mm.

Each member constituting the laminated structure in the present disclosure will be described below.

### (Outer member)

A laminated structure in the present disclosure includes an outer member having a concave portion.

A shape of the concave portion is not particularly limited, and the cross section may be substantially rectangular as shown in FIG. 1.

The outer member may contain one or more resin material(s). Examples of the resin material contained in the outer member include a thermosetting resin and a thermoplastic resin.

Examples of the thermoplastic resins include a polyethylene, a polypropylene, a polycarbonate (PC), a polystyrene, a polyvinyl chloride, a vinyl-based polymer, a polyester, a polyamide, an acrylonitrile-butadiene-styrene copolymer resin (ABS resin), a (meth)acrylic resin, an acrylonitrile-ethylene-propylene-diene-styrene copolymer resin (AES resin), a thermoplastic elastomer. Among them, the thermoplastic resin is preferably at least one resin selected from the group consisting of a polycarbonate, an ABS resin, a (meth)acrylic resin and an AES resin.

The (meth)acrylic resin preferably contains a polymethyl methacrylate (PMMA) resin.

Examples of the thermosetting resins include a silicone resin, a urethane resin, a melamine resin, an epoxy resin, a phenol resin, and a urea resins.

The resin material is preferably selected from the group consisting of a PC, an ABS resin, a (meth)acrylic resin and an AES resin, and particularly preferably a polycarbonate.

Polypropylene has a light specific gravity, is easy to process, has high tensile strength, impact strength and compression strength, and is also excellent in weather resistance and heat resistance, among resin materials.

An ABS resin is relatively easy to apply surface treatment, and therefore, it is easy to apply coating after molding, is excellent in chemical resistance and rigidity, and is also excellent in impact resistance, heat resistance and cold resistance, among plastic materials.

A PC has high impact resistance, excellent weather resistance and heat resistance, and excellent transparency, among plastic materials. In addition, polycarbonate is easy to process, relatively light among plastic materials, and is a durable material.

The outer member may contain additives such as an inorganic particle, a colorant, and an ultraviolet absorber within the range that does not impair the properties of the laminated structure in the present disclosure.

A wavelength of a laser with which the outer member is irradiated varies depending on the laser irradiation device used or the like. For example, a laser transmittance of the outer member is preferably 30% or more, more preferably 60% or more, and still more preferably 90% or more.

As the laser, for example, a laser having a wavelength of from 800 nm to 1100 nm may be used.

A relative permittivity of the outer member at 77 GHz may be from 2.5 to 3.0, from 2.5 to 2.9, or from 2.5 to 2.8.

A dielectric loss tangent of the outer member is preferably 0.010 or less from the viewpoint of transmission of radio waves such as millimeter waves. The lower limit of the dielectric loss tangent is not particularly limited.

A thickness of the outer member can be appropriately designed according to the application of the laminated structure. A shape of the outer member is also not particularly limited.

### (Inner material)

The laminated structure in the present disclosure includes an inner member having a convex portion that fits with the concave portion of the outer member, and facing the outer member. A shape of the convex portion in the fitting portion is not particularly limited, and it is preferable to have a shape along the shape of the concave portion.

The inner member may contain one or more resin material(s). Examples of the resin material contained in the inner member include a thermosetting resin and a thermoplastic resin. Since the thermosetting resin and the thermoplastic resin are as described above, their description is omitted here.

Also, since the preferable resin material is the same as that of the outer member, the description is omitted here.

The inner member may contain additives such as an inorganic particle, a colorant, and an ultraviolet absorber within a range that does not impair the properties of the laminated structure in the present disclosure.

A wavelength of the laser with which the inner member is irradiated differs depending on the laser irradiation device used or the like. For example, a laser transmittance of the inner member is preferably 30% or less, and more preferably 10% or less.

A relative permittivity of the inner member at 77 GHz may be from 2.5 to 3.0, from 2.5 to 2.9, or from 2.5 to 2.8.

A dielectric loss tangent of the inner member is preferably 0.010 or less from the viewpoint of transmission of radio waves such as millimeter waves. The lower limit of the dielectric loss tangent is not particularly limited.

A thickness of the inner member can be appropriately designed according to the application of the laminated structure. A shape of the inner member is also not particularly limited.

### (Metal layer)

The laminated structure in the present disclosure includes a metal layer between the outer member and the inner member.

The metal layer may be, for example, a metal particle layer containing a metal particle e, and may be a silver particle layer containing a silver particle.

In addition, the metal particle layer may have a sea-island structure in which metal particles are dispersedly provided in a shape of islands.

A thickness of the metal layer is not particularly limited, and is preferably about from 30 nm to 200 nm.

In a case in which the metal layer is a silver particle layer, a proportion of silver particles in the silver particle layer is preferably 70% or less, and preferably from 60% to 65%, when the cross section of the silver particle layer in the thickness direction is observed. In a case in which the proportion of silver particles in the silver particle layer is 70% or less, the transmittance of millimeter wave radar tends to be further improved.

The proportion of silver particles in the silver particle layer refers to the value measured as follows.

A transmission electron micrograph is taken at a magnification of 300,000 times for the cross section in the thickness direction of the silver particle layer in the laminated structure. A center line passing through the center of the silver particle layer in the thickness direction is determined for the obtained electron micrograph. Next, the length of the portion where the central line and the silver particles overlap is determined. The percentage of a value obtained by dividing the length of the portion where the central line and the silver particles overlap by the length of the entire central line is defined as the proportion of the silver particles in the silver particle layer.

A surface resistivity of the silver particle layer is preferably 10⁷Ω/sq or more, and more preferably 5×10⁷Ω/sq or more. This tends to result in a state in which an appropriate gap is formed between the silver particles that constitute the silver particle layer, and the laminated structure in the present disclosure tends to be excellent in millimeter wave transmittance.

The upper limit of the surface resistivity of the silver particle layer is not particularly limited.

The surface resistivity of the silver particle layer refers to the value measured according to JIS K6911:2006.

### (Undercoat layer)

From the viewpoint of improving the adhesion between the outer member or the inner member and the silver particle layer, and from the viewpoint of forming a smooth surface on the outer member or the inner member, an undercoat may be provided between the outer member or the inner member and the silver particle layer.

For forming the undercoat layer, a fluorine resin paint, polyester resin paint, an epoxy resin paint, a melamine resin paint, a silicone resin paint, an acrylic silicone resin paint, an acrylic urethane resin paint or the like may be used. It is preferable to use an acrylic silicone resin paint or an acrylic urethane resin paint. The acrylic silicone resin paint has excellent adhesion to outer members or inner members, high gloss retention and color retention, and also excellent chemical resistance, oil resistance, and water resistance. The acrylic urethane resin paint forms a flexible coating film, and is excellent in adhesion, durability, weather resistance and chemical resistance. These resin paints may be used singly or in combination of two or more.

A thickness of the undercoat layer is not particularly limited, and from the viewpoint of ensuring a smooth surface, it is preferably about from 5 µm to 25 µm.

A primer layer may be provided between the undercoat layer and the outer member or inner member in order to improve adhesion between the undercoat layer and the outer member or inner member.

### (Top coat layer)

Atop coat layer may be provided on or above the silver particle layer for the purpose of protecting the silver particle layer.

The top coat layer is a layer provided on the outermost surface of the decorative article, and the top coat layer facilitates protection of the silver particle layer.

The top coat layer preferably has transparency that does not hide the silver particle layer, and may be colorless clear (colorless transparent) or colored clear (colored transparent).

For forming the top coat layer, a fluorine resin paint, polyester resin paint, an epoxy resin paint, a melamine resin paint, a silicone resin paint, an acrylic silicone resin paint, an acrylic urethane resin paint or the like may be used. It is preferable to use an acrylic silicone resin paint or an acrylic urethane resin paint. The acrylic silicone resin paint has excellent adhesion to outer members or inner members, high gloss retention and color retention, and also excellent chemical resistance, oil resistance, and water resistance. The acrylic urethane resin paint forms a flexible coating film, and is excellent in adhesion, durability, weather resistance and chemical resistance. These resin paints may be used singly or in combination of two or more.

A thickness of the top coat layer is not particularly limited, and is preferably about from 20 µm to 40 µm. In a case in which the thickness of the top coat layer is 20 µm or more, the silver particle layer tends to be sufficiently protected, and in a case in which it is 40 µm or less, cracks, peeling, poor adhesion or the like due to change over time are less likely to occur.

The laminated structure in the present disclosure may include a configuration other than the outer member, the inner member and the metal layer. It may include, for example, another member on at least one of the outer side of the outer member and the inner side of the inner member..

### (Method of producing laminated structure)

A method of producing the laminated structure described above will be described with reference to FIGs. 4 to 6.

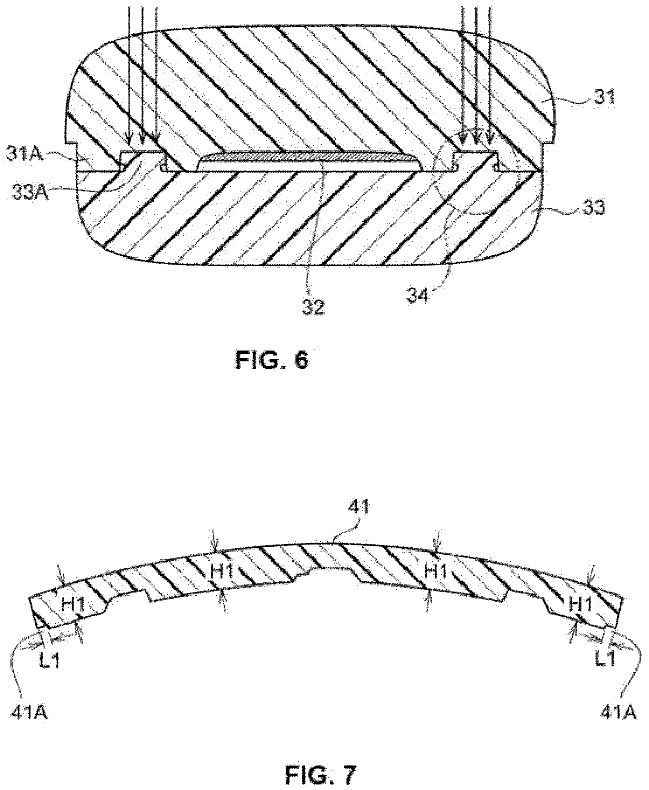

The laminated structure described above may be produced by preparing an outer member 31 having a concave portion 31A (FIG. 4); preparing an inner member 32 having a convex portion 32A (FIG. 4); inserting the convex portion 32A of the inner member 32 into the concave portion 31A of the outer member 31 (FIG. 5); and forming a fitting portion 34 by heat-melting the convex portion 32A of the inner member 32 with a laser or the like, and fitting it with the concave portion 31A of the outer member 31 (FIG. 6).

In FIG. 6, the arrow indicates the laser, which is irradiated in the direction of the arrow.

In the above method of producing a laminated structure, a metal layer may be formed on a surface having the concave portion in the outer member or a surface having the convex portion in the inner member. In FIG. 4, an outer member with a metal layer is shown.

Further, the method of producing a laminated structure in the present disclosure may include forming a metal layer on the surface of at least one of the outer member and the inner member.

Each process constituting the method of producing the laminated structure will be described below.

### (Preparing outer member and Preparing inner member)

For the outer member and the inner member, commercially available ones may be used, or they may be produced by a conventionally known method.

For example, the outer member and the inner member may be produced by injection molding a composition containing the above-described resin material and the like.

The convex portion of the inner member preferably have a size that allows it to be inserted into the concave portion of the outer member.

A ratio (l2/l1) of a width l2 of the convex portion with respect to a width 11 of the concave portion shown in FIG. 4 is preferably 0.9 or less, and more preferably 0.7 or less.

From the viewpoint of airtightness and strength of the fitting portion, l is preferably from 0.7 mm to 2.0 mm, and more preferably 1.0 mm to 1.5 mm.

From the viewpoint of airtightness and strength of the fitting portion, l2 is preferably from 0.5 mm to 1.8 mm, and more preferably from 0.8 mm to 1.2 mm.

### (Inserting convex portion into concave portion)

A method of producing a laminated structure includes inserting a convex portion into a concave portion.

### (Forming the fitting portion)

A method of producing a laminated structure includes forming a fitting portion by heat-melting the convex portion of the inner member, and fitting it with the concave portion of the outer member.

By heat-melting the convex portion, the convex portion is deformed into a shape that fits into the concave portion to form a fitting portion.

The method of heat-melting the convex portion is not particularly limited, and preferably laser irradiation. By heat-melting the convex portion with a laser irradiation, it is possible to control the heating area and tend to reduce damage to the inner member around heat-melted convex portion.

In a case in which a laser transmittance of the outer member is 90% or more and a laser transmittance of the inner member is 30% or less, it is preferable to irradiate the laser from the surface on the outer member side.

### (Forming metal layer)

A method of producing a laminated structure may include forming a metal layer on a surface of at least one of the outer member and the inner member.

In preparing the outer member and preparing the inner member described above, a metal layer may be formed on one surface of the prepared outer member and inner member.

The metal layer may be a metal particle layer as described above, or may be a silver particle layer.

The silver particle layer may be formed by a silver mirror reaction. Moreover, the silver particle contained in the silver particle layer may include a silver particle precipitated by a silver mirror reaction (precipitated silver particles).

Furthermore, the silver particle layer may exhibit a sea-island structure in which silver particles are dispersedly provided in a shape of islands.

Formation of the silver particle layer by the silver mirror reaction is carried out by placing two liquids, namely, a water-soluble silver salt aqueous solution and a reducing agent aqueous solution containing a reducing agent and a strong alkaline component, on a surface of the outer member, on a surface of the inner member, or on a surface of an undercoat layer described later (hereinafter, these surfaces may be collectively referred to as "silver mirror reaction treated surface") so as to be mixed thereof. This causes an oxidation-reduction reaction to generate silver particles and form a silver particle layer.

### (Forming undercoat layer)

A method of producing a laminated structure may include forming an undercoat layer. The method of forming the undercoat layer is not particularly limited, and the undercoat layer may be formed by applying the above-described paint or the like to a surface of the outer member or the like and drying it.

### (Forming top coat layer)

A method of producing a laminated structure may include forming a top coat layer. The method of forming the top coat layer is not particularly limited, and the top coat layer may be formed by applying the above-described paint or the like to a surface of the metal layer and drying it.

### <Object detection structure>

An object detection structure in the present disclosure includes the layered structure in the present disclosure described above and a millimeter wave radar that emits millimeter waves toward the layered structure. Since the layered structure in the present disclosure may reduce an amount of transmission attenuation of millimeter wave, the object detection structure in the present disclosure is excellent in millimeter wave radar transmission/reception performance.

Note that the layered structure in the present disclosure may be combined with a radar that transmits and receives radio waves other than millimeter waves.

### EXAMPLES

Examples in the present disclosure will be described below, but the present disclosure is not limited to the following examples.

### <Example 1>

### (Preparing outer member)

As shown in FIG. 7, a polycarbonate (PC) substrate (relative permittivity at 77 GHz: 2.8, dielectric loss tangent: 0.008) having an elliptical shape with a length of 119 mm, a width of 165 mm and a thickness of a general portion of 4.2 mm was prepared as an outer member.

The general portion refers to the part indicated by symbol H1 in FIG. 7.

The outer member used in Example 1 has a portion thinner than the general portion. By forming a metal layer on the thinner portion, that portion looks like it's floating, when viewed from the side opposite to the metal layer forming surface.

As shown in FIG. 7, the outer member 41 had a concave portion 41A along its outer peripheral edge on one surface, and a width L1 of the concave portion was 1.2 mm.

When the laser transmittance of the outer member at a wavelength of 1070 nm was measured, it was 92%.

### (Preparing of inner member)

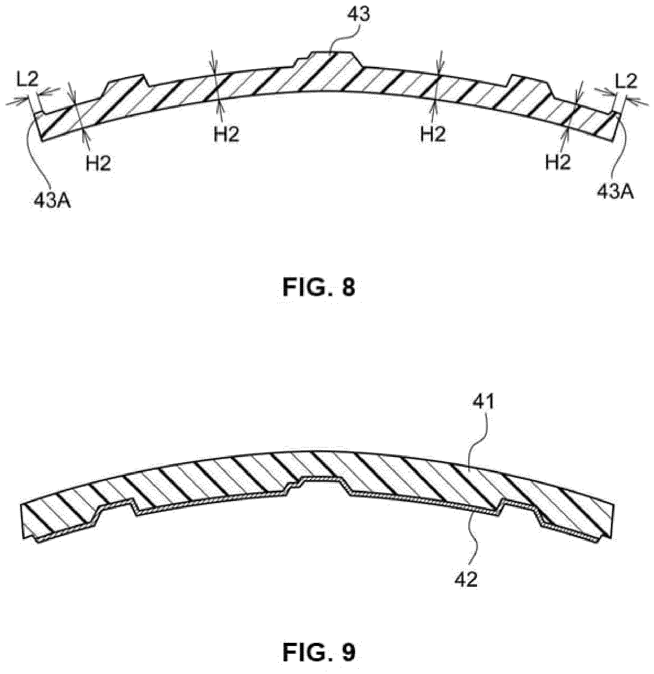

As shown in FIG. 8, a polycarbonate (PC) substrate (relative permittivity at 77 GHz: 2.8, dielectric loss tangent: 0.008) having an elliptical shape with a length of 119 mm, a width of 165 mm and a thickness of a general portion of 2.5 mm was prepared as an outer member.

The general portion refers to the part indicated by symbol H2 in FIG. 8, and faces the general portion of the outer member.

The inner member used in Example 1 has a portion thicker than the general portion.

As shown in FIG. 8, the inner member 43 had a convex portion 43A along its outer peripheral edge on one surface, and a width L2 of the concave portion was 0.8 mm.

When the laser transmittance of the inner member at a wavelength of 1070 nm was measured, it was 0%.

### (Forming metal layer)

Two liquids of MSPS-Ag (trade name) and MSPS-Do (manufactured by Mitsubishi Paper Mills, Ltd.) were sprayed inward from the position of the concave portion of the outer member that forms the fitting portion with the inner member, using a two-head spray gun to form a silver particle layer 42 by a silver mirror reaction (see FIG. 9).

Then, in order to remove moisture on the surface of the silver particle layer, it was dried for 30 minutes in a drying oven set at 45°C after blowing compressed air (air blow).

### (Inserting convex portion into concave portion)

As described above, the inner member and the outer member having the undercoat layer and the metal layer formed on the surface having the concave portions were opposed to each other, and the convex portions of the inner member were inserted into the concave portions of the outer member.

### (Forming fitting portion)

Using Panasonic's VL-W1A00, a laser with a wavelength of 1070 nm is irradiated from the surface of the outer member to the convex portion inserted into the concave portion, and the convex portions were heat-melted while pressing the outer member toward the inner member side to fit into the concave portion to form a fitting portion, thereby obtaining a laminate structure.

In the laminated structure, the fitting portion was formed along the shape of the laminated structure (that is, elliptical shape) to form a specific region.

The distance d between the inner peripheral edge of the fitting portion and the outer peripheral edge of the laminated structure was 1.2 mm.

The appearance of the fitting portion was visually observed, and no damage due to laser irradiation was observed, and it had an excellent appearance.

### <Comparative Example 1>

A laminated structure was produced by insert molding. Specifically, it was as follows.

An outer member having a metal layer was prepared in the same manner as in Example 1, except that it did not have a concave portion.

A laminate structure was obtained by placing the outer member in a mold, injecting heat-melted polycarbonate into the mold, and molding the inner member on the outer member.

In the laminated structure, the inner member and the outer member were joined over the entire surface, and the appearance of the joint was excellent.

### -Evaluation of Appearance-

In the above example and comparative example, laminated structures were produced, visually observed, and evaluated based on the following evaluation criteria.

The results are shown in Table 1.

### (Evaluation results)

A: It was confirmed that the laminated structure has a high glossiness and an excellent appearance.
B: The laminated structure was inferior in glossiness, and there was room for improvement in its appearance.

**[Table 1]**

| | Evaluation of Appearance |
|---|---|
| Example 1 | A |
| Comparative Example 1 | B |

As shown in Table 1, the laminate structure of Example 1 was found to be superior in appearance to the laminate structure of Comparative Example 1.

The present disclosure of Japanese Patent Application No. 2021-015926 filed on February 3, 2021 incorporated herein by reference in their entirety. All documents, patent applications, and technical standards described in the present specification are incorporated herein by reference to the same extent as if each individual document, patent application, or technical standard were specifically and individually indicated to be incorporated by reference.

## Claims

1. A laminated structure comprising, in the following order:
an outer member having a concave portion;
a metal layer; and
an inner member having a convex portion that is fitted with the concave portion to form a fitting portion.

2. The laminated structure according to claim 1, further comprising a region surrounded by the fitting portion.

3. The laminated structure according to claim 1 or 2, wherein the fitting portion is provided within 3 mm from an outer peripheral edge of the laminated structure.

4. The laminated structure according to any one of claims 1 to 3, wherein the metal layer comprises a silver particle layer.

5. The laminated structure according to any one of claims 1 to 4, wherein the metal layer has a sea-island structure in which metal particles are dispersedly provided in a shape of islands.

6. The laminated structure according to any one of claims 1 to 5, which is used as an exterior member of a movable body.

7. An object detection structure comprising:
the laminated structure according to any one of claims 1 to 6; and
a millimeter wave radar that emits a millimeter wave toward the laminated structure.
